# EUROPEAN PATENT APPLICATION

(11) **EP 4 826 882 A1**
(43) Date of publication of application: **21.10.2026**
(21) Application number: 26162607.1
(22) Date of filing: 05.03.2026
(51) Int. Cl.: H01M 50/342, H01M 50/15, H01M 50/103, H01M 50/578

(54) **RECHARGEABLE BATTERY, BATTERY PACK AND VEHICLE INCLUDING THE SAME**

(30) Priority: 16.04.2025 KR 20250049733
(71) Applicant: SAMSUNG SDI CO., LTD., Yongin-si, Gyeonggi-do 17084 (KR)
(72) Inventor: HWANG, San, 17084 Yongin-si (KR)
(74) Representative: Maiwald GmbH

(57) **Abstract**

A rechargeable battery, including an electrode assembly, a case accommodating the electrode assembly, the case including one or more opened portions, a cap plate coupled to each of the one or more opened portions of the case, an electrode terminal at the cap plate, a first vent portion at one of the case and the cap plate, the first vent portion being rupturable by a first rupture pressure, and a second vent portion opposite to the first vent portion, the second vent portion being rupturable by a second rupture pressure different from the first rupture pressure.

## Description

### BACKGROUND

### 1. Field

The present disclosure relates to a rechargeable battery, a battery pack and a vehicle including the same.

### 2. Description of the Related Art

Recently, rechargeable batteries are widely used not only for small devices such as portable electronic devices, but also for mid-sized and large-sized devices such as battery packs for hybrid vehicles or electric vehicles or electric power storage devices.

These rechargeable batteries are power generation devices consisting of a laminated structure of a positive electrode, a separator, and a negative electrode and capable of being repeatedly charged and discharged. Typically, the positive electrode contains lithium metal oxide as the positive electrode active material. The negative electrode contains a carbon-based negative electrode active material such as graphite. A rechargeable battery has a configuration in which lithium ions released from the positive electrode are absorbed into the carbon-based negative electrode active material of the negative electrode when charged, and lithium ions contained within the carbon-based negative electrode active material are absorbed into the lithium metal oxide of the positive electrode when discharged, so that charging and discharging are repeated.

### SUMMARY

An aspect includes a rechargeable battery, including an electrode assembly, a case accommodating the electrode assembly, the case including one or more opened portions, a cap plate coupled to each of the one or more opened portions of the case, an electrode terminal at the cap plate, a first vent portion at one of the case and the cap plate, the first vent portion being rupturable by a first rupture pressure, and a second vent portion opposite to the first vent portion, the second vent portion being rupturable by a second rupture pressure different from the first rupture pressure.

Another aspect includes a rechargeable battery, including an electrode assembly, a case accommodating the electrode assembly, the case having a first opened side and a second opened side opposite the first opened side, a first cap plate coupled to the first opened side of the case, the first cap plate including a first vent portion rupturable by a first rupture pressure, a second cap plate coupled to the second opened side of the case, the second cap plate including a second vent portion rupturable by a second rupture pressure different from the first rupture pressure, and an electrode terminal at each of the first cap plate and the second cap plate, the electrode terminal being electrically connected to the electrode assembly.

The first rupture pressure may be within a range of 5kgf to 14kgf.

The second rupture pressure may be within a range of 15kgf to 24kgf.

An area of the first vent portion may be different from an area of the second vent portion.

An area of the first vent portion may be within a range from 0.5cm² to 2.0cm².

An area of the second vent portion may be within a range from 4.0cm² to 6.0cm².

The rechargeable battery may further include a third vent portion rupturable by a third rupture pressure, the third vent portion being on a surface other than that of the first vent portion or the second vent portion.

The third rupture pressure may be relatively higher than the first rupture pressure and the second rupture pressure.

The third rupture pressure may be within a range of 25kgf to 40kgf.

An area of the third vent portion may be relatively greater than areas of the first vent portion and the second vent portion.

An area of the third vent portion may be within a range from 7.0cm² to 9.0cm².

The first vent portion may be spaced apart from the electrode terminal.

The second vent portion may be spaced apart from the electrode terminal.

The electrode terminal may include a first electrode terminal at the first cap plate, and a second electrode terminal at the second cap plate.

The electrode terminal may include a first conductive member outside the case, and a second conductive member electrically connected to the electrode assembly, the second conductive member being coupled to the first conductive member.

The rechargeable battery may further include a lead tab inside the case, the lead tab connecting the electrode assembly and the second conductive member.

The rechargeable battery may further include an insulating member inside the case, the insulation member being between the first cap plate and the lead tab and between the second cap plate and the lead tab.

Embodiments include a battery pack, including one or more battery modules including a plurality of the claimed rechargeable battery, and a framework for accommodating the battery module.

Embodiments include a vehicle including a rechargeable battery as claimed in claim 1.

### BRIEF DESCRIPTION OF THE DRAWINGS

Features will become apparent to those of ordinary skill in the art by describing in detail exemplary embodiments with reference to the attached drawings, in which:
FIG. 1 is a perspective view illustrating a rechargeable battery according to a first embodiment of the present disclosure;
FIG. 2 is a cross-sectional view illustrating the rechargeable battery of FIG. 1;
FIG. 3 is a side view of the rechargeable battery of FIG. 1 viewed from right;
FIG. 4 is a side view of the rechargeable battery of FIG. 1 viewed from left;
FIG. 5 is a bottom view of the rechargeable battery of FIG. 1 viewed from bottom;
FIG. 6 is a front view illustrating the direction in which gas or flame is emitted from a rechargeable battery;
FIG. 7 is a perspective view illustrating a rechargeable battery according to the second embodiment of the present disclosure;
FIG. 8 is a perspective view illustrating a battery pack including the rechargeable battery of FIG. 1; and
FIG. 9 is a side view of a vehicle including a battery pack according to embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Embodiments of the present disclosure are provided to more completely explain the present disclosure for a person of ordinary skill in the art, and the following embodiments may be modified in many different forms, and the scope of the present disclosure is not limited to the following embodiments. Rather, the embodiments are provided to further fulfill and complete the present disclosure, and to fully convey the idea of the present disclosure to a person of ordinary skill in the art.

As used in this specification, the term "and/or" includes any one of the listed items and any combination of one or more. In addition, the meaning of "connected" in this specification means not only the case where member A and member B are directly connected, but also the case where member A and member B are indirectly connected such that member C is interposed between member A and member B.

The terminology used in this specification is used to describe particular embodiments and is not intended to limit the present disclosure. As used in this specification, a singular form may include a plural form, unless the context clearly indicates otherwise. Also, in this specification, "comprise," "include," "comprising," or "including" is used for specifying the presence of only the shapes, numbers, steps, operations, members, elements, and/or groups thereof, but not for precluding the presence or addition of one or more other shapes, numbers, operations, members, elements and/or groups.

Although the terms of "first", "second", etc. are used to describe various members, components, regions, layers, and/or parts in this specification, it is obvious that these members, components, regions, layers, and/or parts should not be limited by these terms. These terms are used only for distinguishing one member, component, region, layer or part from another region, component, layer or part. Therefore, the "first" member, component, region, layer or part described below may refer to the "second" member, component, region, layer or part without departing from the teachings of the present disclosure.

Additionally, space-related terms such as "beneath," "below," "lower," "above", and "upper" may be used to facilitate understanding of one element or feature illustrating in drawings relative to another element or feature. These space-related terms are intended to facilitate understanding of the present disclosure in various process states or usage states of the present disclosure, and are not intended to limit the present disclosure. For example, if an element or feature of a drawing is flipped, the element or feature described as "lower" or "below" becomes "upper" or "above". Therefore, "lower" is a concept that includes "upper" or "below".

Hereinafter, a rechargeable battery according to a first embodiment of the present disclosure will be described with reference to drawings.

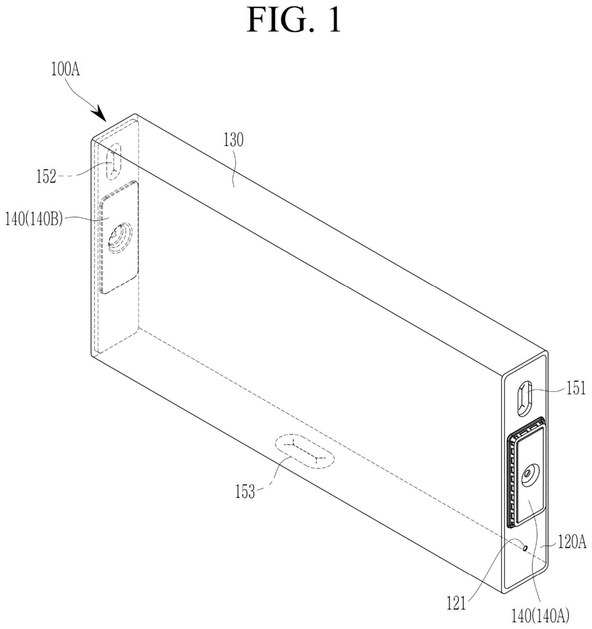

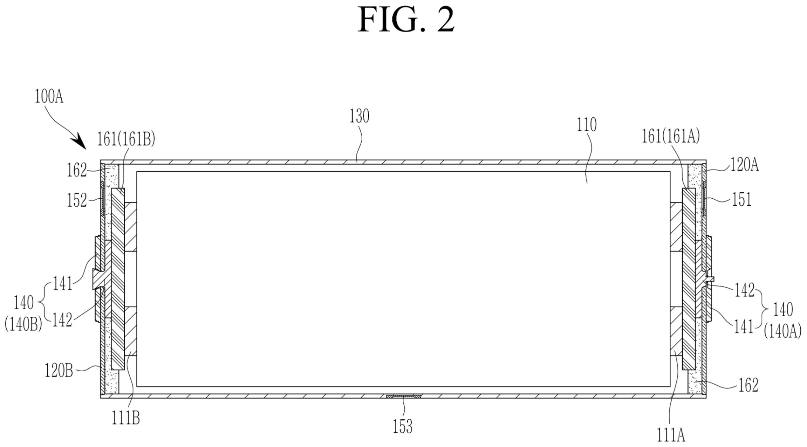

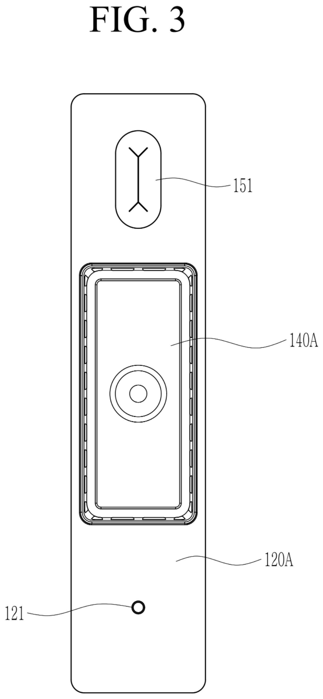

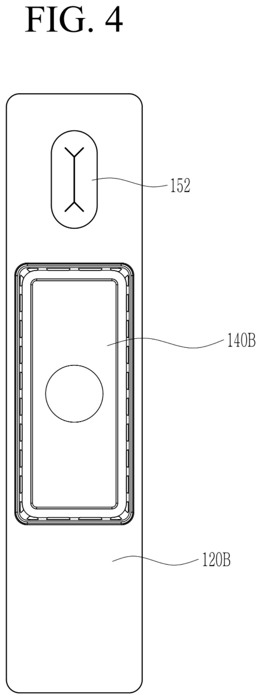

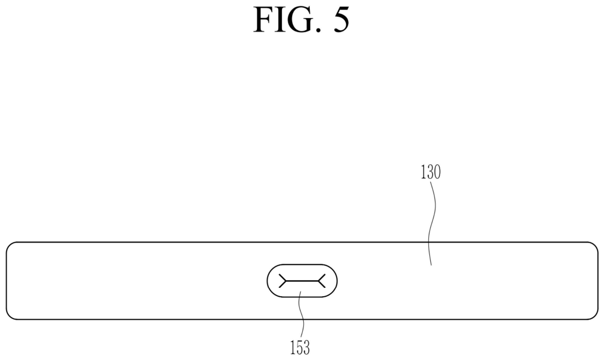

FIG. 1 is a perspective view illustrating a rechargeable battery according to a first embodiment of the present disclosure, FIG. 2 is a cross-sectional view illustrating the rechargeable battery of FIG. 1, FIG. 3 is a side view of the rechargeable battery of FIG. 1 viewed from right, FIG. 4 is a side view of the rechargeable battery of FIG. 1 viewed from left, and FIG. 5 is a bottom view of the rechargeable battery of FIG. 1 viewed from bottom.

Referring to FIG. 1 to FIG. 5, a rechargeable battery according to an embodiment of the present disclosure includes an electrode assembly 110, a case 130, a first cap plate 120A, a second cap plate 120B, and an electrode terminal 140.

The electrode assembly 110 charges and discharges electric current. The electrode assembly 110 may have a form of a laminate structure including a first electrode plate, a second electrode plate, and a separator are repeatedly wound or stacked.

For example, the electrode assembly 110 may be a laminated type in which electrode plates are arranged to be stacked in multiple layers. In other embodiments, the electrode assembly 110 may be a jelly-roll type with electrode plates repeatedly wound.

The first electrode plate may include a first base tab 111A. If the first electrode plate is plural, the first base tab 111A is also plural. A plurality of the first base tab 111A may be coupled together by welding methods such as laser, resistance welding and ultrasonic welding.

Additionally, the second electrode plate may include a second base tab 111B. If the second electrode plate is plural, the second base tab 111B is also plural. A plurality of the second base tab 111B may be coupled together by welding methods such as laser, resistance welding and ultrasonic welding.

The separator may be interposed between the first electrode plate and the second electrode plate. The separator prevents short circuit between the first electrode plate and the second electrode plate and enables the movement of lithium ions. For this purpose, the separator may be made of a size relatively larger than the first electrode plate or the second electrode plate.

Such separators may include, for example, a porous polymer film or a porous non-woven fabric. The porous polymer film may be composed of a single layer or multiple layers including a polyolefin polymer such as an ethylene polymer, a propylene polymer, an ethylene/butene copolymer, an ethylene/hexene copolymer, and an ethylene/methacrylate copolymer.

The porous non-woven fabric may contain high melting point glass fibers and polyethylene terephthalate (polyethylene terephthalate) fibers. However, the separator may be a high heat resistance separator (CCS: Ceramic Coated Separator) including ceramic.

The case 130 accommodates the electrode assembly 110, and left and right sides of the case 130 (e.g., a first side and a second side opposite the first side) are open. The case 130 may be, for example, any one of pouch type, cylindrical type, and square type. In the present disclosure, an example where the case 130 is a polygonal type will be described.

The shape of the case 130 may be, for example, hexahedral. The manufacturing method of the case 130 may be, for example, a deep drawing method, but this may vary.

The aforementioned electrode assembly 110 is accommodated in the case 130 together with an electrolyte. The aforementioned electrode assembly 110 may be inserted into the case 130 through an open portion of the case 130.

The electrolyte may be injected through an electrolyte injection opening 121, and the electrolyte injection opening 121 may be sealed by a separate plug or sealing material.

The electrolyte may be non-aqueous electrolyte. The electrolyte may contain lithium salt and organic solvent. The organic solvent may include at least one of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide (dimethyl sulfoxide), acetonitrile (acetonitrile), dimethoxyethane, diethoxyethane, sulfolane, gamma-butyrolactone, propylene sulfide, and tetrahydrofuran.

The first cap plate 120A is coupled to the opened left side of the case 130. The first cap plate 120A includes a first vent portion 151 that is ruptured by the first rupture pressure.

The first vent portion 151 may be positioned spaced apart from the electrode terminal 140. For example, the first vent portion 151 may be positioned upwardly relative to the electrode terminal 140 with reference to the direction shown in FIG. 3.

Conversely, the first vent portion 151 may also be positioned downward relative to the electrode terminal 140.

The first rupture pressure may be within a range of 5kgf to 14kgf. The first rupture pressure may be a pressure value at which gas is generated inside the case 130.

Accordingly, when gas is generated inside the case 130 and the internal pressure gradually increases to reach the first rupture pressure, the first vent portion 151 (see FIG. 3) may be ruptured prior to the second vent portion 152 (see FIG. 4). That is, when gas is generated inside the case 130, a rupture may occur in a direction toward the first vent portion 151.

The second cap plate 120B is coupled to the opened right side of the case 130. The second cap plate 120B includes a second vent portion 152 that is ruptured by a second rupture pressure different from the first rupture pressure.

The second vent portion 152 may be positioned spaced apart from the electrode terminal. For example, the second vent portion 152 may be positioned upwardly relative to the second terminal with reference to the direction (e.g., orientation) shown in FIG. 4. Conversely, the second vent portion 152 may also be positioned downward relative to the second terminal.

The second rupture pressure may be within a range of 15kgf to 24kgf. The second rupture pressure may be a pressure value at which a fire is generated inside the case 130. Accordingly, if a fire occurs inside the case 130 to reach the second rupture pressure, the second vent portion 152 may be ruptured. That is, if a fire occurs inside the case 130, a rupture may occur in a direction toward the second vent portion 152.

Meanwhile, as a method of manufacturing the first vent portion 151 and the second vent portion 152 such that the first rupture pressure and the second rupture pressure are different, for example, a method of manufacturing those to have different areas may be used.

To be more specific, the area of the first vent portion 151 and the area of the second vent portion 152 may be different from each other. For example, the area of the first vent portion 151 may be within a range from 0.5cm² to 2.0cm². And the area of the second vent portion 152 may be within a range from 4.0cm² to 6.0cm². In this way, by making the area of the second vent portion 152 larger than the area of the first vent portion 151, the rupture pressures can be different.

Unlike the above, by manufacturing the thickness of the first vent portion 151 to be relatively thinner than the thickness of the second vent portion 152, it may be possible for the first vent portion 151 to be ruptured at a relatively lower pressure value than the second vent portion 152.

Meanwhile, the first cap plate 120A, the second cap plate 120B, and the case 130 may be made of aluminum and may be coupled to each other by a welding method. For example, the first cap plate 120A and the second cap plate 120B may be coupled to the case 130 by laser welding. Detailed descriptions of the first cap plate 120A and the second cap plate 120B will be omitted.

The electrode terminal 140 is installed at each of the first cap plate 120A and the second cap plate 120B, and is electrically connected to the electrode assembly 110.

The electrode terminal 140 may include, for example, a first electrode terminal 140A and a second electrode terminal 140B.

The first electrode terminal 140A may be connected to the first electrode plate , and the second electrode terminal 140B may be connected to the second electrode plate . The first electrode plate may be a positive electrode, and the second electrode plate may be a negative electrode. Therefore, the first electrode terminal 140A may be the positive electrode, the second electrode terminal 140B may be the negative electrode, or vice versa.

Meanwhile, the positive electrode may include a current collector and a positive electrode active material layer positioned on the current collector. The positive electrode active material layer may include a positive electrode active material.

A compound capable of reversible intercalation and deintercalation of lithium (lithiated intercalation compound) may be used as a positive electrode active material. Specifically, at least one of a composite oxide of lithium and a metal selected from cobalt, manganese, nickel, and a combination thereof may be used.

The composite oxide may be a lithium transition metal composite oxide, and specific examples thereof include lithium nickel oxide, lithium cobalt oxide, lithium manganese oxide, lithium phosphoric acid iron compound, cobalt-free nickel-manganese oxide, or a combination thereof.

As an example, a compound expressed by any one of the following formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L1_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above formulas, A is Ni, Co, Mn, or combination thereof; X is Al, Ni, Co, Mn, Cr, Fe, Mg, Sr, V, rare-earth element or combination thereof; D is O, F, S, P, or combination thereof; G is Al, Cr, Mn, Fe, Mg, La, Ce, Sr, V, or combination thereof; and L1 is Mn, Al or combination thereof.

The content of the positive electrode active material may be 90 wt% to 99.5 wt% with respect to 100 wt% of the positive electrode active material layer, and the contents of the binder and conductive material may be 0.5 wt% to 5 wt%, respectively, with respect to 100 wt% of the positive electrode active material layer. Al may be used as the current collector of the positive electrode, but this may vary.

Meanwhile, the negative electrode includes a current collector and a negative electrode active material layer positioned on the current collector. The negative electrode active material layer includes a negative electrode active material and may further include a binder and/or conductive material.

The negative electrode active material includes a material capable of reversibly intercalating/de-intercalating lithium ions, lithium metal, an alloy of lithium metal, a material capable of being doped into and de-doped from lithium, or a transition metal oxide.

A material capable of reversibly intercalating/de-intercalating lithium ions may include a carbon-based negative electrode active material, for example, crystalline carbon, amorphous carbon or a combination thereof. Examples of crystalline carbon include graphite such as natural graphite or artificial graphite, and examples of amorphous carbon include soft carbon or hard carbon, mesophase pitch carbide, and calcined coke.

As the material capable of being doped into and de-doped from lithium metal, Si-based negative electrode active material or Sn-based negative electrode active material may be used. The Si-based negative electrode active material may be silicon, silicon-carbon composite, SiOₓ (0 < x < 2), Si-based alloy, or combination thereof.

The silicon-carbon composite can be a composite of silicon and amorphous carbon. According to one embodiment, the silicon-carbon composite may be in a form of a silicon particle and amorphous carbon coated on the surface of the silicon particle.

The silicon-carbon composite may further contain crystalline carbon. For example, the silicon-carbon composite may include a core including crystalline carbon and silicon particles and an amorphous carbon coating layer on the surface of the core.

The negative electrode active material layer may contain negative electrode active material of 90 wt% to 99 wt%, binder of 0.5 wt% to 5 wt% of the binder, and conductive material of 0 wt% to 5 wt%.

The binder may be a non-aqueous binder, an aqueous binder, a dry binder or a combination thereof. When using an aqueous binder, it may further include a cellulose-based compound capable of providing viscosity.

As the negative electrode current collector, a material selected from copper foil, nickel foil, stainless steel foil, titanium foil, nickel foam, copper foam, polymer substrate coated with conductive metal, and a combination thereof may be used.

The first electrode terminal 140A and the second electrode terminal 140B may be formed with the same structure inside the cap plate 120, and may be formed with partially different structures outside the cap plate 120. In the first electrode terminal 140A and the second electrode terminal 140B, the portions positioned outside the cap plate 120 may change (e.g., may vary) depending on the design of the rechargeable battery 100A.

Meanwhile, the electrode terminal 140 may include, for example, a first conductive member 141 and a second conductive member 142.

First conductive member 141 is positioned outside the case 130. The first conductive member 141 may be a shape of a plate of which a part is penetrated.

The second conductive member 142 is electrically connected to the electrode assembly 110 and coupled to the first conductive member 141. The second conductive member 142 penetrates the first cap plate 120A and the second cap plate 120B to be coupled to the first conductive member 141. More specifically, a middle portion of the second conductive member 142 protrudes to be coupled to the first conductive member 141 by a welding method.

Meanwhile, a rechargeable battery 100A according to an embodiment of the present disclosure may further include a third vent portion 153.

The third vent portion 153 may be positioned on a surface where the first vent portion 151 or the second vent portion 152 is not positioned in the rechargeable battery 100A. For example, the third vent portion 153 may be installed at a lower surface of the case 130 (in the orientation shown in FIGS. 1 and 2).

The third vent portion 153 may be ruptured by a third rupture pressure. The third rupture pressure may be relatively higher than the rupture pressures of the first vent portion 151 and the second vent portion 152.

The third rupture pressure may be within a range of 25kgf to 40kgf. The third rupture pressure may be a pressure value at which a flame is generated inside the case 130.

Therefore, if a flame occurs inside the case 130 and the internal pressure suddenly reaches the third rupture pressure, the third vent portion 153 may rupture. That is, if a flame occurs inside the case 130, a rupture may occur in a direction to the third vent portion 153.

Meanwhile, the area of the third vent portion 153 may be relatively wider than the areas of the first vent portion 151 and the second vent portion 152. For example, the area of the third vent portion 153 may be within a range from 7.0cm² to 9.0cm².

Accordingly, the third rupture pressure of the third vent portion 153 can be made greater than the first rupture pressure and the second rupture pressure.

Meanwhile, a rechargeable battery 100A according to an embodiment of the present disclosure may include a lead tab 161. The lead tab 161 is installed inside the case 130. The lead tab 161 connects the electrode assembly 110 and the second conductive member 142.

More specifically, the lead tab 161 may include the first lead tab 161A and the second lead tab 161B. The first lead tab 161A connects the aforementioned first base tab 111A and the second conductive member 142 of the first electrode terminal 140A.

The second lead tab 161B connects the aforementioned second conductor tab and the second conductive member 142 of the second electrode terminal 140B. The shape of the lead tab 161 may vary depending on the design of the rechargeable battery 100A.

Meanwhile, a gasket may be installed between the first electrode terminal 140A and the first cap plate 120A and between the second electrode terminal 140B and the second cap plate 120B. The gasket insulates and seals the electrode terminal 140 from the first cap plate 120A and the second cap plate 120B. Detailed descriptions of the gasket will be omitted.

Meanwhile, the rechargeable battery 100A according to an embodiment of the present disclosure may include an insulating member 162.

The insulating member 162 (e.g., two of the insulating member 162) is installed inside the case 130, between the first cap plate 120A and the lead tab 161, and between the second cap plate 120B and the lead tab 161. The insulating member 162 may prevent the first cap plate 120A and the second cap plate 120B from being electrically connected to lead tab 161.

Additionally, the insulating member 162 may also fix the position of the lead tab 161. The insulating member 162 is made of insulating material. For example, the insulating member 162 may be, for example, non-woven fabric or plastic, but this may vary.

The insulating member 162 may be, for example, an insulating polymer resin. The insulating polymer resin may be one selected from polypropylene (PP: polypropylene), polyphenylene sulfide (PPS: polyphenylene sulfide), polyether sulfone (PES: polyether sulfone), and modified polyphenylene oxide (PPO: polyphenylene oxide).

PPS has excellent in heat resistance, dimensional stability, chemical resistance, low absorption, and nonflammability, and little changes in electric characteristics in response to temperature changes. PES is a non-crystalline aromatic resin with heat resistance of 200°C, and excellent in dimensional stability, and water resistance. Also, PES has good transparency, high glass transition temperature (Tg: 223°C), low expansion property (CTE: 2.3x10-5/°C), and excellent mechanical strength. Modified PPO is a nonflammability resin with excellent mechanical properties, heat resistance, small deterioration of properties even at low temperatures, and small mold shrinkage.

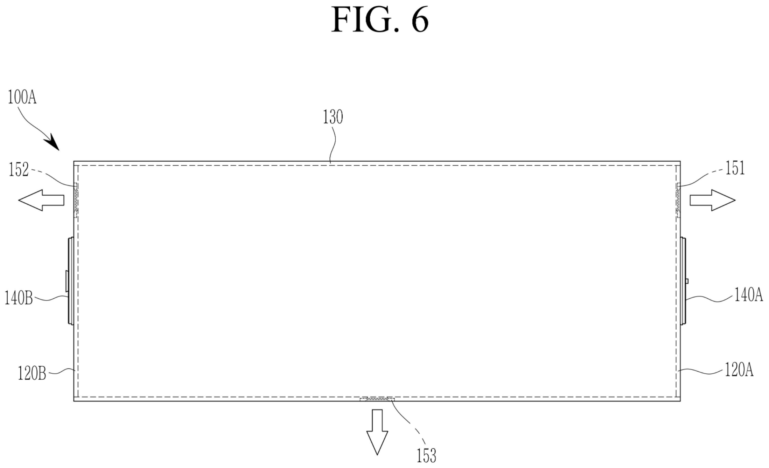

FIG. 6 is a front view illustrating the direction in which gas or flame is emitted from a rechargeable battery.

Referring to FIG. 6, in a rechargeable battery 100A according to an embodiment of the present disclosure, when the pressure inside the case 130 increases or thermal runaway occurs, the first vent portion 151 and the second vent portion 152 having different rupture pressures can prevent internal pressure from continuously increasing.

Also, the direction of the flame and gas pressure generated inside the case 130 can be guided to left side, right side and downside where the third vent portion 153 is positioned, thereby preventing the case 130 from being excessively damaged and seriously deformed in shape.

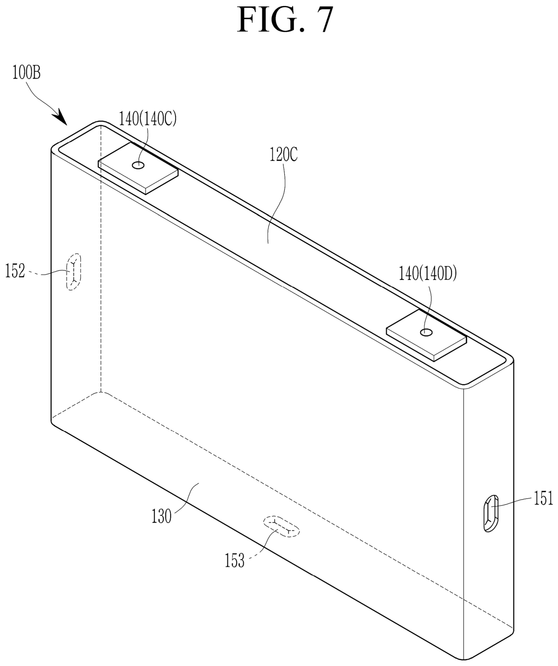

FIG. 7 is a perspective view illustrating a rechargeable battery according to the second embodiment of the present disclosure.

Referring to FIG. 7, a rechargeable battery 100B according to a second embodiment of the present disclosure includes an electrode assembly , a case 130, a cap plate 120C, an electrode terminal 140, a first vent portion 151 and a second vent portion 152. For the rechargeable battery 100B according to the second embodiment of the present disclosure, descriptions the same as the rechargeable battery (100A, see FIG. 1) according to the first embodiment of the present disclosure will be omitted.

The case 130 is opened at one or more side. The case 130 of the rechargeable battery 100B according to the second embodiment of the present disclosure may be opened at the top (e.g., in the orientation shown in FIG. 7).

The cap plate 120C is coupled to the opened portion of the case 130. A rechargeable battery 100B according to a second embodiment of the present disclosure may include one of the cap plate 120C. And, the cap plate 120C included in the rechargeable battery 100B according to the second embodiment of the present disclosure may be arranged to face upward (e.g., in the orientation shown), unlike the first cap plate 120A and the second cap plate 120B of the rechargeable battery (100A, see FIG. 1) according to the first embodiment of the present disclosure.

The electrode terminal 140 is installed on the cap plate 120C. Since the electrode terminal 140 is installed on the cap plate 120C, the electrode terminal 140 can be arranged to face upward like the cap plate 120C too. Electrode terminal 140 may include a third electrode terminal 140C and a fourth electrode terminal 140D. The third electrode terminal 140C may be the negative electrode, the fourth electrode terminal 140D may be the positive electrode, or vice versa.

The first vent portion 151 is installed at one selected from the case 130 and the cap plate 120C, and is ruptured by a first rupture pressure.

The second vent portion 152 is positioned opposite to the first vent portion 151. The second vent portion 152 may be positioned opposite to the first vent portion 151 with the electrode assembly as a reference. The second vent portion 152 is ruptured by a second rupture pressure that is different from the first rupture pressure.

More specifically, the first vent portion 151 included in the rechargeable battery 100B according to the second embodiment of the present disclosure may be positioned on a right side surface of the case 130 with the direction illustrated in FIG. 7 as a reference. Additionally, the second vent portion 152 may be positioned on a left side surface of the case 130.

Meanwhile, the rechargeable battery 100B according to the second embodiment of the present disclosure may further include a third vent portion 153.

The third vent portion 153 may be positioned at a part of the case 130 and the cap plate 120C where the first vent portion 151 or the second vent portion 152 is not positioned. For example, the third vent portion 153 may be positioned on the lower surface (e.g., in the orientation shown in FIG. 7) of case 130. Also, the third vent portion 153 may be positioned on an upper surface of the case 130.

The rechargeable battery 100B according to the second embodiment of the present disclosure as described above can selectively induce pressure or flame to various directions depending on degree of the pressure inside the case 130, which prevents the case 130 from being excessively damaged and seriously deformed.

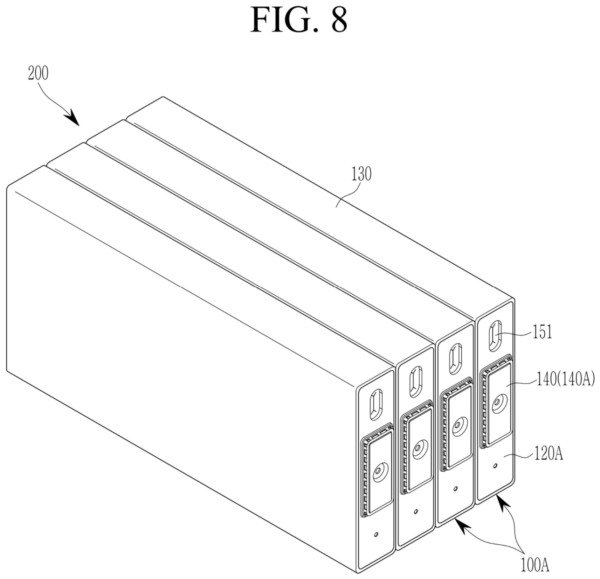

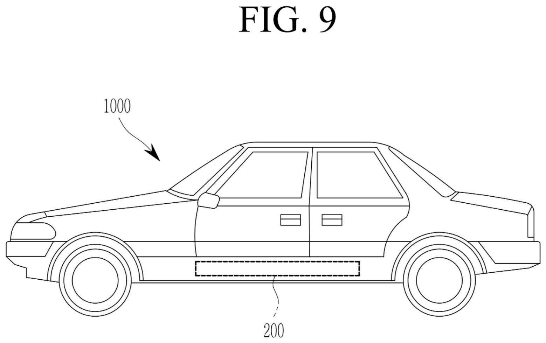

FIG. 8 is a perspective view illustrating a battery pack including the rechargeable battery of FIG. 1, and FIG. 9 is a side view of a vehicle including a battery pack.

Referring to FIG.8 and FIG. 9, a battery pack 200 may include one or more battery modules including a plurality of the rechargeable battery 100A and a framework accommodating the battery modules. The plurality of the rechargeable battery 100A may be electrically connected to one another using a cell connection unit (CCU) as an electrical interconnection device.

The battery pack 200 is a set of the plurality of the rechargeable battery 100A. The battery pack 200 may be configured in series, in parallel, or in a combination thereof to implement a variety of voltages, capacities, or electric power densities. The battery pack 200 may include a battery management system (BMS).

The battery management system may protect the rechargeable battery 100A from operation outside the safe operation range, monitor its status, calculate auxiliary data, report the data, and control the operating environment.

Meanwhile, the framework of the battery pack 200 may be mounted on a structure of the vehicle 1000. If the battery pack 200 is to be secured to the floor of the vehicle 1000, it may be mechanically coupled to the floor by bolts passing through the framework of the battery pack 200. The framework may be made of aluminum or aluminum alloy to reduce the weight.

The thermal runaway phenomenon of rechargeable batteries is occurring due to various causes. A plurality of units (e.g. rechargeable battery cells) are integrated into a rechargeable battery in order to secure a high energy capacity, but if a thermal runaway phenomenon occurs in one unit, it can spread to other units, causing a larger fire or explosion.

In particular, if a case is excessively deformed by thermal runaway, it may also damage adjacent rechargeable batteries or other devices. Therefore, a solution for preventing accidents caused by thermal runaway phenomenon is required.

Although various embodiments of the present disclosure have been described above, the drawings and detailed descriptions of the disclosure described so far are merely exemplary of the present disclosure, and are only used for the purpose of explaining the present disclosure, and are not used to limit the meaning or the scope of the present disclosure described in the patent claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A rechargeable battery (100A), comprising:
an electrode assembly (110);
a case (130) accommodating the electrode assembly (110), the case (130) including one or more opened portions;
a cap plate (120) coupled to each of the one or more opened portions of the case (130);
an electrode terminal (140) at the cap plate (120);
a first vent portion (151) at one of the case (130) and the cap plate (120), the first vent portion (151) being rupturable by a first rupture pressure; and
a second vent portion (152) opposite to the first vent portion (151), the second vent portion (152) being rupturable by a second rupture pressure different from the first rupture pressure.

2. A rechargeable battery (100B), comprising:
an electrode assembly (110);
a case (130) accommodating the electrode assembly (110), the case (130) having a first opened side and a second opened side opposite the first opened side;
a first cap plate (120A) coupled to the first opened side of the case (130), the first cap plate (120A) including a first vent portion (151) rupturable by a first rupture pressure;
a second cap plate (120B) coupled to the second opened side of the case (130), the second cap plate (120B) including a second vent portion (152) rupturable by a second rupture pressure different from the first rupture pressure; and
an electrode terminal (140) at each of the first cap plate (120A) and the second cap plate (120B), the electrode terminal (140) being electrically connected to the electrode assembly (110).

3. The rechargeable battery (100A, 100B) as claimed in claim 1 or 2,
wherein the first rupture pressure is within a range of 5kgf to 14kgf;
wherein preferably the second rupture pressure is within a range of 15kgf to 24kgf.

4. The rechargeable battery (100A, 100B) as claimed in any one of the preceding claims, wherein an area of the first vent portion (151) is different from an area of the second vent portion (152);
wherein preferably an area of the first vent portion (151) is within a range from 0.5cm² to 2.0cm²;
wherein preferably an area of the second vent portion (152) is within a range from 4.0cm² to 6.0cm².

5. The rechargeable battery (100A, 100B) as claimed in any one of the preceding claims, further comprising a third vent portion (153) rupturable by a third rupture pressure, the third vent portion (153) being on a surface other than that of the first vent portion (151) or the second vent portion (152).

6. The rechargeable battery (100A, 100B) as claimed in claim 5, wherein the third rupture pressure is relatively higher than the first rupture pressure and the second rupture pressure;
wherein preferably the third rupture pressure is within a range of 25kgf to 40kgf.

7. The rechargeable battery (100A, 100B) as claimed in claim 6, wherein an area of the third vent portion (153) is relatively greater than areas of the first vent portion (151) and the second vent portion (152);
wherein preferably an area of the third vent portion (153) is within a range from 7.0cm² to 9.0cm².

8. The rechargeable battery (100B) as claimed in any one of the claims 2 to 7, wherein the first vent portion (151) is spaced apart from the electrode terminal (140).

9. The rechargeable battery (100B) as claimed in any one of the claims 2 to 8, wherein the second vent portion (152) is spaced apart from the electrode terminal (140).

10. The rechargeable battery (100B) as claimed in any one of the claims 2 to 9, wherein the electrode terminal (140) comprises:
a first electrode terminal (140A) at the first cap plate (120A), and
a second electrode terminal (140B) at the second cap plate (120B).

11. The rechargeable battery (100B) as claimed in any one of the claims 2 to 10, wherein the electrode terminal (140) comprises:
a first conductive member (141) outside the case (130); and
a second conductive member (142) electrically connected to the electrode assembly (110), the second conductive member (142) being coupled to the first conductive member (141).

12. The rechargeable battery (100B) as claimed in claim 11, further comprising a lead tab (161) inside the case (130), the lead tab (161) connecting the electrode assembly (110) and the second conductive member (142).

13. The rechargeable battery (100B) as claimed in claim 12, further comprising an insulating member (162) inside the case (130), the insulation member being between the first cap plate (120A) and the lead tab (161) and between the second cap plate (120B) and the lead tab (161).

14. A battery pack (200), comprising:
one or more battery modules comprising a plurality of rechargeable batteries as claimed in any one of the preceding claims; and
a framework for accommodating the battery module.

15. A vehicle (1000) comprising a rechargeable battery (100A, 100B) as claimed in any one of the preceding claims.
